# EUROPÄISCHE PATENTSCHRIFT

(11) **EP 2 178 928 B1**
(45) Veröffentlichungstag und Bekanntmachung des Hinweises auf die Patenterteilung: **17.11.2010**
(21) Anmeldenummer: 08787077.0
(22) Anmeldetag: 11.08.2008
(51) Int. Cl.: C08F 6/00, C08F 2/22, C08F 210/02, C08F 218/04

(54) **KONTINUIERLICHES POLYMERISATIONSVERFAHREN**
CONTINUOUS POLYMERIZATION PROCESS
PROCÉDÉ CONTINU DE POLYMÉRISATION

(30) Priorität: 14.08.2007 DE 102007038332
(43) Veröffentlichungstag der Anmeldung: 28.04.2010
(73) Patentinhaber: Wacker Chemie AG, 81737 München (DE)
(72) Erfinder: WEITZEL, Hans-Peter, 84571 Reischach (DE); BRAUNSPERGER, Robert, 84547 Emmerting (DE)
(74) Vertreter: Schuderer, Michael
(86) Internationale Anmeldenummer: PCT/EP2008/060502
(87) Internationale Veröffentlichungsnummer: WO 2009/021930

(56) Entgegenhaltungen:
- EP-A- 0 072 165
- EP-A- 1 067 147
- EP-A- 1 174 445
- EP-A- 1 384 502
- US-A- 3 875 128
- US-A- 4 211 751
- US-A- 4 487 898
- US-A- 5 331 055
- US-A1- 2003 040 570

## Beschreibung

Die Erfindung betrifft ein Verfahren zur Herstellung von Schutzkolloid-stabilisierten Polymerisaten auf Basis von Vinylestern, Ethylen und gegebenenfalls weiteren Comonomeren in Form deren wässrigen Polymerdispersionen oder in Wasser redispergierbaren Polymerpulver mittels kontinuierlicher Emulsionspolymerisation und gegebenenfalls Trocknung der damit erhaltenen wässrigen Polymerdispersionen.

Schutzkolloid-stabilisierte Polymerisate werden vor allem in Form deren wässriger Dispersionen oder in Wasser redispergierbarer Polymerpulver in vielerlei Anwendungen, beispielsweise als Beschichtungsmittel oder Klebemittel, für die unterschiedlichsten Substrate eingesetzt. Als Schutzkolloide werden in der Regel Polyvinylalkohole eingesetzt. Der Einsatz von Polyvinylalkohol ist erstrebenswert, weil dieser im Vergleich zu Systemen, die durch niedermolekulare Verbindungen (Emulgatoren) stabilisiert sind, selbst zur Festigkeit (z.B. Haftzugswerte im Fliesenkleber) beiträgt. Als Monomere zur Herstellung von redispergierbaren Pulvern werden bisher bevorzugt Vinylester und Ethylen eingesetzt, da die Stabilisierung von Acrylatcopolymeren bzw. Styrolacrylatcopolymeren durch Polyvinylalkohol nicht einfach zu bewerkstelligen ist.

Die Herstellung dieser Dispersionen erfolgt traditionell durch Emulsionspolymerisation im Batch- oder Chargenverfahren. Diese Verfahrensweise zeichnet sich durch hohe Flexibilität aus und ist somit vorzugsweise in Anlagen mit großer Produktvielfalt anzutreffen. Außerdem ist diese Vorgehensweise verfahrenstechnisch deutlich weniger anspruchsvoll als ein kontinuierlicher Prozess. Nachteilig ist die im Vergleich zum kontinuierlichen Prozess deutlich geringere Wirtschaftlichkeit des Chargenprozesses.

Der kontinuierliche Prozess ist somit die richtige Wahl für Anlagen mit hohem Ausstoß bei geringer Produktvielfalt. Kernproblem bei der kontinuierlichen Emulsionspolymerisation ist die Einstellung der richtigen Bedingungen für eine permanente Nukleirung neuer Latexpartikel. Die favorisierte Anlagenkonfiguration ist die Rührkesselkaskade, weil derartige Reaktoren bereits im Batchbetrieb eingesetzt werden und somit mit nur geringem wirtschaftlichen Umrüstungsaufwand für den kontinuierlichen Prozess verwendbar wären. Üblicherweise findet man ein mehr oder weniger stark ausgeprägtes Oszillieren der Produkteigenschaften und der Verfahrensparameter, die im Extremfall zu nicht verwendbaren Produkten oder Anlagenschädigungen führen können.

Die US-A 2703794 beschreibt ein Verfahren zur kontinuierlichen Emulsionspolymerisation von Vinylacetat und Ethylen in Gegenwart von Emulgator und gegebenenfalls mit Wasser mischbarem organischen Lösungsmittel, wobei Wasser, Emulgator, Monomere und Initiator gleichzeitig und kontinuierlich zudosiert werden. Der Prozess wird ohne Saatlatex und in einem einzigen Druckreaktor durchgeführt. Nachteilig sind starke Reaktorwandbelegungen und oszillierende Teilchengrößen.

In der US-A 3551396 wird ein Verfahren zur Herstellung von Vinylacetathomopolymerdispersionen in einem Loopreaktor beschrieben, bei dem Monomer und Wasser kontinuierlich im Kreis geführt werden, wobei zusätzliches Monomer und Initiator laufend zudosiert und gebildetes Polymerisat laufend aus dem Reaktor entfernt werden. Die Polymerisation wird ohne Saatlatex und in einem einzigen Druckreaktor durchgeführt.

In der DE-A 2555142 wird ein kontinuierliches Verfahren zur Herstellung von Polymerisaten ethylenisch ungesättigter Monomere nach dem Emulsionspolymerisationsverfahren in mehreren hintereinandergeschalteten Polymerisationsreaktoren beschrieben. Dazu wird ein erster Reaktor mit einer Voremulsion aus Wasser, Initiator, einem Teil der Monomeren und weiteren Hilfsstoffen beschickt, die erhaltene Dispersion in ein zweites Reaktionsgefäß übergeführt, dann der Restanteil der Monomere zugeführt, und schließlich in einem letzten Reaktionsgefäß die Dispersion durch Hinzufügen von weiterem Initiator auspolymerisiert. Am Ende der Reaktorkaskade ist ein Wärmetauscher zur Kühlung der erhaltenen Polymerdispersion angeordnet.

In der DE-A 2456576 wird eine Anlagenkonfiguration bestehend aus einem kühlbaren Rührautoklaven zur Herstellung der Voremulsion aus Monomer, Emulgator, Reduktionsmittel und Wasser, einem Reaktor für die Hauptpolymerisation und einem Rohr für die Nachpolymerisation beschrieben. Die Polymerisation wird in Gegenwart eines Redoxinitiatorsystems durchgeführt, wobei das Reduktionsmittel in hohem Überschuß eingesetzt wird und das Oxidationsmittel in den Reaktor dosiert wird. Die Monomeren werden so zudosiert, dass deren Konzentration einen definierten Grenzwert nicht übersteigt. Nachteilig bei diesem Verfahren ist die schnelle Wandbelagsbildung, die zu geringen Anlagenverfügbarkeiten führt. Ursache hierfür sind unter anderem die stark oszillierenden Eigenschaften der Produkte.

In der US-A 4164489 wird ein Verfahren zur kontinuierlichen Herstellung von Vinylacetat-Ethylendispersionen beschrieben, das sich durch Verwendung eines Saatlatex der ebenfalls kontinuierlich zugeführt wird, auszeichnet. Nachteilig ist, dass diese Saat ein selbständiges Produkt darstellt, das extra für diesen Zweck hergestellt werden muß (geringe Teilchengröße, ca. 200 nm), wobei nicht gewünschte Rezepturbestandteile wie Emulgatoren in das Produkt eingeschleppt werden.

In der EP-A 1174445 und EP-A 1323752 werden Verfahren zur kontinuierlichen Herstellung von Vinylacetat-Ethylendispersionen in mindestens zwei hintereinandergeschalteten Druckreaktoren beschrieben, wobei die Polymerisation mit einem Redoxinitiatorsystem initiiert wird, und die Reduktionskomponente mindestens teilweise dem ersten Druckreaktor zugeführt wird.

Petrocelli et.al. (Polym.Sci.Eng., 80, 544) beschreiben ebenfalls ein Verfahren unter Verwendung von Saatlatex. Auch in diesem Fall wird eine feinteilige (ca. 200 nm Teilchengröße), emulgatorstabilisierte Dispersion verwendet. Der Grundgedanke bei diesem Saatlatexverfahren ist die Einbringung neuer Latexpartikel geringer Größe, die dann im Laufe der Polymerisation zu der gewünschten Teilchengröße anwachsen. Eine interne neue Nukleirung soll durch den Saatlatex unterbunden werden.

Als weitere Alternative zur Erhöhung der Produktivität wird in der Literatur die Kombination von Wärmetauschern mit Batchreaktoren beschrieben. In diesen Fällen werden der Batchreaktor und der Wärmetauscher in einem Kreislauf verbunden, dergestalt, dass das zu kühlende Medium aus dem Reaktor in den Wärmetauscher geführt wird und von dort wieder zurück in den Reaktor geleitet wird. Die zusätzliche Kühlkapazität des externen Wärmetauschers kann zu einer Reduktion der Polymerisationszeit genutzt werden. Nachteilig an diesem Prinzip ist, dass große Stoffmengen mit hoher Geschwindigkeit durch den Wärmetauscher transportiert werden müssen um den Prozess effizient zu halten. Die für diesen Transportvorgang notwendigen Pumpen sind Hochleistungpumpen mit entsprechender starker Energie- und Scherbelastung für das zu transportierende Medium.

In der EP-A 834518 wird ein diskontinuierliches Polymerisationsverfahren beschrieben, bei dem die Polymerisation in einem Reaktor mit einem externen Kühlkreislauf abläuft, bei dem zwingend eine scherungsarme Pumpe eingesetzt werden muss, um die Produkte nicht zu beeinträchtigen.

In der WO-A 03/006510 wird ein diskontinuierliches Polymerisationsverfahren in einem Polymerisationsreaktor mit einem externen Kühlkreislauf beschrieben, bei dem der Polymerisationsansatz mit einer scherungsarmen Zylinder- oder Schlauchmembranpumpe im Kreis gepumpt wird, um die Produkte nicht durch Scherung zu beeinträchtigen.

In der WO-A 02/59158 wird ein Polymerisationsverfahren in einem Reaktor mit externem Kühlkreislauf beschrieben, bei dem der Polymerisationsansatz im Kreis gepumpt wird, und zumindest eine Teilmenge des Monomeren in den externen Kreislauf eindosiert werden muss.

Nachteilig bei den diskontinuierlichen Polymerisationsverfahren, bei denen großvolumige Ansätze mit dispergierten Polymerteilchen umgepumpt werden müssen, ist deren Anfälligkeit zur Koagulation aufgrund der mit der Pumpe eingebrachten Scherkräfte.

Aufgabe der vorliegenden Erfindung war es, einen wirtschaftlichen und technologisch verbesserten Prozess für die Herstellung von Vinylester-Ethylen-Copolymerdispersionen zu entwickeln, der die Oszillationen bei der kontinuierlichen Prozessführung und hohe mechanische Belastung der Verfahren mit externer Kühlung vermeidet. Es waren dabei Probleme zu berücksichtigen, die nicht nur bei der Herstellung, sondern auch bei der Anwendung der gewünschten Produkte, auftreten können. Insbesondere bei der Anwendung von Polymerisaten in Form deren Redispersionspulver zur Verbesserung der Mörteleigenschaften, einem Haupteinsatzgebiet von Redispersionspulvern, müssen die Rezepturen über eine gewisse Zeit stabil bleiben und dürfen ihre Verarbeitungskonsistenz nicht wesentlich verändern (Viskositäts- bzw. Zementstabilität). In der Beton- und Mörtelindustrie spielen darüberhinaus die mechanischen Eigenschaften, wie die Druckfestigkeit, die Porosität und damit der Luftporengehalt eine wesentliche Rolle. Die mit Dispersionspulver vergüteten hydraulisch abbindenden Systeme sollen zudem noch bessere Haftung gegenüber den unvergüteten Systemen erbringen. Alle diese Produkteigenschaften müssen beim Übergang vom traditionellen Batchverfahren zum wirtschaftlicheren kontinuierlichen Verfahren gewährleistet bleiben.

Überraschenderweise wurde nun gefunden, dass bei Kombination der Verfahrensweisen "kontinuierliche Polymerisation" und "externe Kühlung via Wärmetauscher", bei Anordnung des Wärmetauschers vor den Reaktoren, ein Verfahren erhalten werden kann, das die jeweiligen Nachteile der Einzelprozesse vermeidet, hochwirtschaftlich betrieben werden kann und Produkte mit wunschgemäßen Eigenschaften liefert.

Gegenstand der Erfindung ist ein Verfahren zur Herstellung von Polymerisaten auf Basis von Vinylester, Ethylen und gegebenenfalls weiteren Comonomeren in Form deren wässrigen Polymerdispersionen oder in Wasser redispergierbaren Polymerpulver mittels radikalisch initiierter kontinuierlicher Emulsionspolymerisation und gegebenenfalls Trocknung der dabei erhaltenen Polymerdispersion , dadurch gekennzeichnet, dass die Emulsionspolymerisation in einer Kaskade, umfassend
a) mindestens einen vorgeschalteten Wärmetauscher und
b) mindestens zwei hintereinandergeschalteten Rührkesseldruckreaktoren,
so durchgeführt wird, dass der Umsatz bei Verlassen des Wärmetauschers mindestens 10 % des Gesamtpolymerisationsumsatzes beträgt.

Durch die erfindungsgemäße Anordnung werden die oszillativen Probleme der kontinuierlichen Prozessführung in reinen Rührkesselkaskaden ebenso vermieden wie die hohen Scherbelastungen durch das ständige Imkreispumpen bei der Verwendung von externen Wärmetauschern. Das zu polymerisierende Stoffgemisch durchläuft den vorgeschalteten Wärmetauscher bis zu dem geforderten Reaktionsumsatz und tritt anschließend in die Rührkesselkaskade ein. Diese wird dann in traditionellem Sinn weiterbetrieben.

Die erfindungsgemäße Anlagenkonfiguration besitzt außerdem eine deutlich erhöhte spezifische Anlagenleistung, gemessen in Dispersion [kg] /(Zeit [h] x Reaktorvolumen [1]), im Vergleich zur bekannten kontinuierlichen Polymerisation in reinen Rührkesselkaskaden.

Der eingesetzte Wärmetauscher kann alle bekannten Technologien beinhalten, beispielsweise Plattenwärmetauscher, Röhrenwärmetauscher, Rohrbündelwärmetauscher, Spiralwärmetauscher, statischer Mischerwärmetauscher. Bevorzugt ist ein Röhrenwärmetauscher oder Rohrbündelwärmetauscher.

Geeignete Druckreaktoren (Rührkessel) und Drucklosreaktoren sind entsprechend dimensionierte Stahlreaktoren, welche mit den üblichen Rühreinrichtungen, Heiz- und Kühlsystemen, Mess- und Regeleinrichtungen, sowie Leitungen zu Zu- und Abführung von Edukten oder Produkten ausgerüstet sind.

Die Polymerisation wird in einer Kaskade umfassend mindestens einen Wärmetauscher und mindestens zwei hintereinandergeschalteten Druckreaktoren (Rührkessel) durchgeführt und anschließend in mindestens einem Drucklosreaktor weitergeführt. Die bevorzugte Anlagenkonfiguration nach dem oder den Wärmetauschern besteht aus zwei hintereinandergeschalteten Druckreaktoren und einem oder zwei anschließenden Drucklosreaktoren. Werden mehrere Drucklosreaktoren eingesetzt, können diese sowohl wechselweise (nebeneinander) als auch hintereinander (in Reihe) betrieben werden. Höhere Kaskaden mit mehr als zwei Druckreaktoren können eingesetzt werden, sind aber aufgrund der damit verbundenen stark ansteigenden Komplexität der Anlage nicht immer wünschenswert.

Der Prozess wird so geführt, dass in der ganzen Anlagenkette (Wärmetauscher und Druckreaktoren) die Summe der eintretenden Masseströme gleich der Summe der austretenden Masseströme ist.

Bei mehreren Drucklosreaktoren werden diese bevorzugt nebeneinander betrieben und wechselweise benutzt. Der Druck in der Anlagenkette wird so eingestellt, dass vom ersten bis zum letzten der hintereinandergeschalteten Apparate ein abnehmender Druckgradient resultiert, der den Massefluß in der Druckreaktorkaskade gewährleistet. Der Massetransport vom letzten Druckreaktor in den dahintergeschalteten Drucklosreaktor kann mittels druckgeregelter Ventile oder mittels einer Pumpe in dem Maß erfolgen, wie die Stoffströme in die vorgeschalteten Druckreaktoren zugeführt werden.

Vor Beginn der Polymerisation werden die Druckreaktoren zu 50 bis 80 % des Volumens mit einer Polymerdispersion befüllt, welche dem Endprodukt der Polymerisation bezüglich Copolymerzusammensetzung, Art und Menge des Schutzkolloids sowie Teilchengröße und Festgehalt entspricht. Dies kann so erfolgen, dass in den Druckreaktoren diese Dispersion mittels Batch-Polymerisation hergestellt wird, oder die Druckreaktoren mit einer separat hergestellten Dispersion befüllt werden.

Anschließend werden der Wärmetauscher und die Druckreaktoren mit einer solchen Menge an Ethylen beaufschlagt, dass bei einem Druck p1 von vorzugsweise 30 bis 80 bar im Wärmetauscher und ersten Druckreaktor und bei einem Druck p2 von vorzugsweise 10 bis 40 bar im letzten Druckreaktor polymerisiert wird, mit der Maßgabe, dass p1 > p2. Der Ethylendruck wird so reguliert, dass vom ersten bis zum letzten der hintereinandergeschalteten Apparate ein abnehmender Druckgradient resultiert. Vorzugsweise beträgt die Druckdifferenz zwischen zwei hintereinandergeschalteten Apparaten 2 bis 40 bar. Damit wirkt die Druckdifferenz zwischen den Apparaten als treibende Kraft für den Massefluß bei der kontinuierlichen Polymerisation.

Die Edukte des Polymerisationsansatzes können ganz oder teilweise in einer vorgeschalteten Mischeinheit, beispielsweise einem Voremulsionsreaktor, vor dem Wärmetauscher gemischt werden, und anschließend dem Wärmetauscher sowie gegebenenfalls den Druckreaktoren zugeführt werden.

Die Monomere können insgesamt über den Wärmetauscher zudosiert werden, oder auf Wärmetauscher und auf die Druckreaktoren aufgeteilt werden. Vorzugsweise wird so vorgegangen, dass 50 bis 100 Gew.-%, insbesondere mehr als 70 Gew.-%, bezogen auf das Gesamtgewicht, der Vinylestermonomere und gegebenenfalls weiterer Comonomere über den Wärmetauscher zudosiert werden, und der Rest in späteren Druckreaktoren zudosiert wird. Vorzugsweise wird das Ethylen zu mindestens 50 Gew.-% im Wärmetauscher vorgelegt.

Der Schutzkolloid-Anteil kann sowohl vollständig vor, das heißt in einer vorgeschalteten Mischeinheit, dem Wärmetauscher vorgelegt werden, als auch teilweise im ersten Druckreaktor dosiert und der Rest in weiteren Druckreaktoren zudosiert werden. Vorzugsweise werden mindestens 70 Gew.-% des Schutzkolloids vor oder in dem Wärmetauscher zugeführt, besonders bevorzugt wird der Schutzkolloid-Anteil vollständig vor oder in dem Wärmetauscher zugeführt.

Die Polymerisation wird mit einem Redoxsystem aus Oxidations- und Reduktionskomponente initiiert, wobei die Reduktionskomponente vorzugsweise vollständig vor dem Wärmetauscher zugeführt wird, und die Oxidationskomponente vor dem Wärmetauscher zugeführt und in allen Druckreaktoren zudosiert wird. Der Monomerumsatz wird mit der Initiatordosierung gesteuert.

Die Dosierungen können separat (räumlich und zeitlich) durchgeführt werden, oder die zu dosierenden Komponenten können alle oder teilweise voremulgiert dosiert werden.

Die Initiatoren werden insgesamt so zudosiert, dass eine kontinuierliche Polymerisation gewährleistet ist, und der Polymerisationsumsatz beim Austritt aus dem Wärmetauscher ≥ 10 %, bevorzugt ≥ 15 %, besonders bevorzugt ≥ 20 % beträgt. Das restliche Monomergemisch wird in der folgenden Rührkesselkaskade zum gewünschten Umsatz polymerisiert. Vorzugsweise wird im ersten Druckreaktor bis zu einem Restmonomergehalt von 10 bis 20 Gew.-% und im letzten Druckreaktor bis zu einem Restmonomergehalt von ≤ 5 Gew.-% polymerisiert, jeweils bezogen auf das Gesamtgewicht der Monomere.

Die Verweilzeit t_{w} des Stoffgemisches im Wärmetauschers ist in ähnlicher Größenordnung wie die Verweilzeit t_{R} in einem Einzelreaktor in der folgenden Kaskade, entsprechend ist die Dimension des Wärmetauschers zu wählen, um die erforderliche Umsatzrate zu erreichen. Bevorzugt liegt die Verweilzeit t_{w} zwischen 0.8 t_{R} und 0.4 t_{R} ,besonders bevorzugt liegt sie zwischen 0.4 t_{R} und 0.2 t_{R}. Die bevorzugte Zuführung der Reduktionskomponente ausschließlich am Beginn der Reaktorsequenz führt zu einem geringeren Gesamtinitiatorverbrauch und zu besseren mechanischen Eigenschaften der Dispersionsfilme. Insgesamt werden vorzugsweise die Dosierraten der Edukte so eingestellt, dass mittlere Verweilzeiten in der Druckreaktorkaskade von insgesamt 60 bis 180 Minuten je Einzelreaktor resultieren.

Nach Abschluß der Polymerisation in den Druckreaktoren wird zur Restmonomerentfernung in Anwendung bekannter Methoden im Drucklosreaktor nachpolymerisiert, im allgemeinen durch mit Redoxkatalysator initiierter Nachpolymerisation. In den Drucklosreaktoren werden daher beide Initiatorkomponenten im nötigen Maße für die Endkonfektionierung zugegeben. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Geeignete Vinylester sind solche von Carbonsäuren mit 1 bis 18 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Hexion). Besonders bevorzugt ist Vinylacetat. Die genannten Vinylester werden im allgemeinen in einer Menge von 30 bis 90 Gew.-%, bezogen auf das Gesamtgewicht der Monomere, copolymerisiert.

Ethylen wird im allgemeinen in einer Menge von 1 bis 40 Gew.-%, bezogen auf das Gesamtgewicht der Monomere, copolymerisiert.

Geeignete weitere Comonomeren sind solche aus der Gruppe der Ester der Acrylsäure oder Methacrylsäure, der Vinylhalogenide wie Vinylchlorid, der Olefine wie Propylen. Geeignete Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat. Diese Comonomere werden gegebenenfalls in einer Menge von 1 bis 40 Gew.-%, bezogen auf das Gesamtgewicht der Monomere, copolymerisiert.

Gegebenenfalls können noch 0.05 bis 10 Gew.-%, bezogen auf das Gesamtgewicht des Monomergemisches, weitere Monomere (Hilfsmonomere) copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder - methacrylat.

Bevorzugt werden Comonomergemische von Vinylacetat mit 1 bis 40 Gew.-% Ethylen; sowie
Comonomermischungen von Vinylacetat mit 1 bis 40 Gew.-% Ethylen und 1 bis 50 Gew.-% von einem oder mehreren weiteren Comonomeren aus der Gruppe der Vinylester mit 1 bis 18 C-Atomen im Carbonsäurerest wie Vinylpropionat, Vinyllaurat, Vinylester von alpha-verzweigten Carbonsäuren mit 9 bis 11 C-Atomen wie VeoVa9, VeoVa10, VeoVa11; und
Gemische von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesonders n-Butylacrylat oder 2-Ethylhexylacrylat; und
Gemische mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten;
sowie Gemische mit Vinylacetat, 1 bis 40 Gew.-% Ethylen und 1 bis 60 Gew.-% Vinylchlorid; wobei
die Gemische noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstemperatur Tg von -50°C bis +50°C, bevorzugt von -20°C bis + 30°C, resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Polymerisation erfolgt nach dem Emulsionspolymerisationsverfahren, wobei die Polymerisationstemperatur im allgemeinen 40°C bis 100°C, vorzugsweise 60°C bis 90°C beträgt. Die Initiierung der Polymerisation erfolgt mit den für die Emulsionspolymerisation gebräuchlichen Redox-Initiator-Kombinationen. Beispiele für geeignete Oxidationsinitiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid und Azobisisobutyronitril. Bevorzugt werden die Natrium-, Kalium- und Ammoniumsalze der Peroxodischwefelsäure und Wasserstoffperoxid. Die genannten Initiatoren werden im allgemeinen in einer Menge von 0.01 bis 2.0 Gew.-%, bezogen auf das Gesamtgewicht der Monomere, eingesetzt.

Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat (Brüggolit) und (Iso-)Ascorbinsäure. Bevorzugt werden Natriumhydroxymethansulfinat und (Iso-)Ascorbinsäure. Die Reduktionsmittelmenge beträgt vorzugsweise 0.015 bis 3 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Vorzugsweise wird in Gegenwart von Schutzkolloiden polymerisiert. Geeignete Schutzkolloide sind teilverseifte Polyvinylalkohole; Polyvinylpyrrolidone; Polyvinylacetale; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere; kationische Polymerisate wie Poly-DADMAC.

Bevorzugte Schutzkolloide sind teilverseifte oder vollverseifte Polyvinylalkohole. Besonders bevorzugt sind teilverseifte Polyvinylalkohole mit einem Hydrolysegrad von 80 bis 95 Mol-% und einer Höpplerviskosität, in 4 %-iger wässriger Lösung, von 1 bis 30 mPas (Methode nach Höppler bei 20°C, DIN 53015). Besonders bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung, von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylalkohols. Es können auch Gemische der genannten Polyvinylalkohole eingesetzt werden.

Weitere besonders bevorzugte Polyvinylalkohole sind teilverseifte, hydrophobierte Polyvinylalkohole, die durch polymeranaloge Umsetzung, beispielsweise Acetalisierung der Vinylalkoholeinheiten mit C₁- bis C₄-Aldehyden wie Butyraldehyd erhalten werden. Der Anteil der hydrophoben Einheiten beträgt vorzugsweise 0.1 bis 10 Gew.-%, bezogen auf das Gesamtgewicht des teilverseiften Polyvinylacetats. Der Hydrolysegrad beträgt von 80 bis 95 Mol-%, vorzugsweise 85 bis 94 Mol-%, die Höpplerviskosität (DIN 53015, Methode nach Höppler, 4 %-ige wässrige Lösung) von 1 bis 30 mPas, vorzugsweise 2 bis 25 mPas.

Am meisten bevorzugt werden Polyvinylalkohole mit einem Hydrolysegrad von 85 bis 94 Mol-% und einer Höpplerviskosität, in 4 %-iger wässriger Lösung, von 3 bis 15 mPas (Methode nach Höppler bei 20°C, DIN 53015). Die genannten Schutzkolloide sind mittels dem Fachmann bekannter Verfahren zugänglich.

Die Polyvinylalkohole werden im allgemeinen in einer Menge von insgesamt 1 bis 20 Gew.-%, bezogen auf das Gesamtgewicht der Monomere, bei der Polymerisation zugesetzt.

Bei dem erfindungsgemäßen Verfahren wird vorzugsweise ohne Zusatz von Emulgatoren polymerisiert. In Ausnahmefällen kann es von Vorteil sein, Emulgatoren einzusetzen, gegebenenfalls 1 bis 10 Gew.-%, bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Die mit dem erfindungsgemäßen Verfahren erhältlichen wässrigen Dispersionen haben einen Feststoffgehalt von 30 bis 75 Gew.-%, vorzugsweise von 50 bis 60 Gew.-%. Zur Herstellung der in Wasser redispergierbaren Polymerpulver werden die wässrigen Dispersionen, gegebenenfalls nach Zusatz von Schutzkolloiden als Trocknungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Trocknungshilfe in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt.

Geeignete Trocknungshilfen sind teilverseifte Polyvinylalkohole; Polyvinylpyrrolidone; Polyvinylacetale; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere; kationische Polymerisate wie Poly-DADMAC. Bevorzugt werden keine weiteren Schutzkolloide als Polyvinylalkohole als Trocknungshilfe eingesetzt

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Metakaolin, Silicate mit Teilchengrößen vorzugsweise im Bereich von 10 nm bis 10 µm.

Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Die wässrigen Polymerdispersionen und die in Wasser redispergierbaren, schutzkolloidstabilisierten Polymerpulver können in den dafür typischen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben. Ferner als Bindemittel für Beschichtungsmittel und Klebemittel oder als Beschichtungs- bzw. Bindemittel für Textilien und Papier.

Die nachfolgenden Beispiele dienen der weiteren Erläuterung der Erfindung:

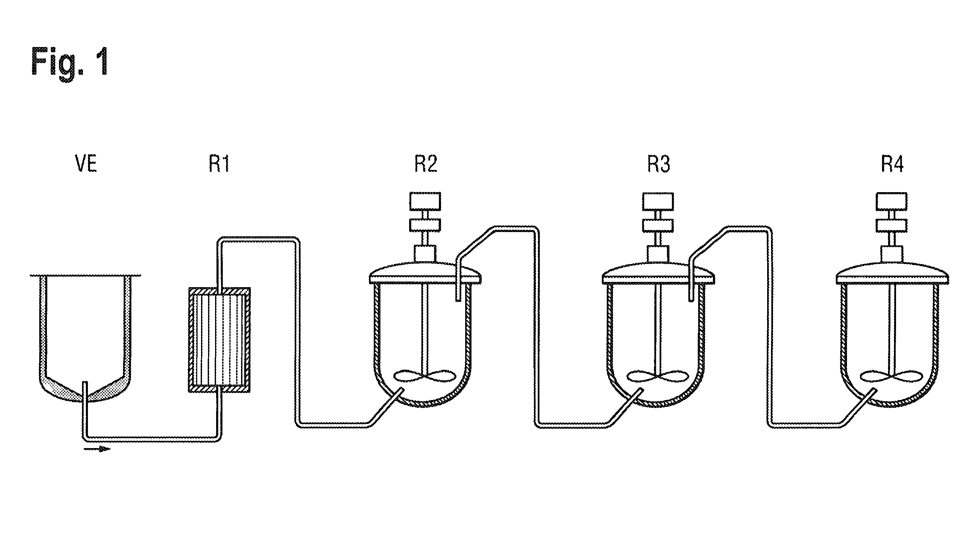

Figur 1 zeigt ein Reaktorsystem umfassend eine vorgeschaltete Mischeinheit VE, zur Herstellung der Voremulsion, einen Röhrenwärmetauscher R1 und zwei Rührkesseldruckreaktoren R2 und R3 sowie den Drucklosreaktor R4 zur Restmonomerentfernung. In Beispiel und Vergleichsbeispiel war diese Anlage wie folgt dimensioniert: Der Wärmetauscher war ein Röhrenwärmetauscher mit einer Gesamtrohrlänge von 84 m und einem Innendurchmesser des Rohres von 9 mm; das Volumen des Wärmetauscher betrug somit ca. 5 Liter. Die beiden Rührkesseldruckreaktoren hatten jeweils ein Volumen von ca. 18 Liter, einen Rührer und einen kühlbaren Mantel. Alle Apparate waren auf einen nutzbaren Druckbereich bis 80 bar ausgelegt.

### Beispiel :

In den Voremulsionsreaktor VE wurden die wässrige Phase aus 74 kg einer 20 %-igen Lösung eines Polyvinylalkohols mit einem Hydrolysegrad von 88 Mol-% und einer Viskosität nach Höppler von 4 mPas, 98 kg Wasser sowie die organische Phase bestehend aus 182 kg Vinylacetat und 50 kg Ethylen vermischt. Der pH Wert wurde mit 50 g Ameisensäure auf 4,0 eingestellt und es wurden 230 g Brüggolit sowie 20 g Eisenammoniumsulfat zugegeben. Das Gemisch wurde auf 65°C aufgeheizt.

In den Reaktoren R2 und R3, mit einem Volumen von jeweils 18 1, wurden jeweils 15 kg einer wässrigen Dispersion eines Vinylacetat-Ethylen-Copolymerisats mit 83 Gew.-% Vinylacetat und 17 Gew.-% Ethylen, welche mit 7 Gew.-%, bezogen auf Copolymerisat, eines Polyvinylalkohols mit einem Hydrolysegrad von 88 Mol-% und einer Viskosität nach Höppler von 4 mPas stabilisiert war, vorgelegt. Aus dem Vorratsbehälter VE wurde das homogenisierte Gemisch mit einer Flußrate von 12 kg/h in das Reaktorsystem eingespeist. Dazu wurde das Gemisch in den Röhrenwärmetauscher R1 eingeleitet und nach Verlassen des Wärmetauschers in den Reaktor R2 und von dort in den Reaktor R3. Nach dem Reaktor R3 wurde die Dispersion in den Drucklosreaktor R4 entspannt und überschüssiges Ethylen abgetrennt.

Vor Eintritt des Gemisches in den Röhrenwärmetauscher wurde über eine weitere Dosierung der Initiator Kaliumpersulfat (3 Gew.-%-ige Lösung in Wasser) mit einer Rate von 80 g/h zugeführt.
Im Reaktor R2 wurden 100 g/h Kaliumpersulfat (3 Gew.-%-ige Lösung in Wasser) zudosiert. Im Reaktor R3 wurden 180 g/h Kaliumpersulfat (3 Gew.-%-ige Lösung in Wasser) zudosiert.

Die fertige Dispersion wurde mittels einer Pumpe aus dem Druckreaktor R3 in den drucklosen Reaktor R4 gefördert und dort mit 50 ml t-Butylhydroperoxid (10 Gew.-%-ige Lösung in Wasser) und 50 ml Brüggolit (10 Gew.-%-ige Lösung in Wasser) je 10 kg Dispersion nachpolymerisiert.

Der Polymerisationsumsatz betrug bei Verlassen des Wärmetauschers ca. 25 % und bei Verlassen des Reaktors R2 bzw. R3 65 % bzw. 92 %. Die Polymerisation wurde über eine Dauer von 80 Stunden durchgeführt.
Man erhielt eine Dispersion mit einem Feststoffgehalt von 53.1 %, einer Viskosität von 160 mPas (Brookfield 20 bei 23°C), einem pH-Wert von 3,4, einer Tg von -6°C und einem Teilchengrößendurchmesser Dw von 1240 nm. Die Teilchengrößenverteilung war über die Dauer des Experimentes stabil. Es wurde keine Wandbelagsbildung beobachtet.
Der Siebrückstand beim Sieben über 250 µm betrug 270 ppm (mg/kg). Der K-Wert betrug 124. Das freie Restmonomer betrug < 430 ppm. Die Dispersion war im Zement stabil.

### Vergleichsbeispiel:

Es wurde die kontinuierliche Polymerisation gemäß Beispiel 1 der EP-A 1174445 durchgeführt.

Man erhielt eine Dispersion mit einem Feststoffgehalt von 50.7 %, einer Viskosität von 90 mPas (Brookfield 20 bei 23°C), einem pH-Wert von 3,8, einer Tg von ca. -6°C und einem Teilchengrößendurchmesser Dw von 1350 nm. Die Teilchengrößenverteilung war über die Dauer des Experimentes stabil. Es wurde keine Wandbelagsbildung beobachtet.
Der Siebrückstand beim Sieben über 250 µm betrug 380 ppm (mg/kg). Der K-Wert betrug 105. Das freie Restmonomer betrug < 390 ppm. Die Dispersion war im Zement stabil.

### Vergleich des Molekulargewichtes via K-Wert:

Die K-Werte wurden gemessen in Anlehnung an DIN EN ISO 1628-2.

| K-Wert | |
|---|---|
| Beispiel | 124 |
| Vergleichsbeispiel | 105 |

### Vergleich des unlöslichen Anteiles:

Von der Dispersion wird ein Film mit einer Schichtdicke von ca. 300 µm (trocken) hergestellt. Von dem trockenen Film wird ein Stück von ca. 1 g (Einwaage A) in 50 ml Ethylacetat gelöst.
Diese Lösung wird 6 h zum Sieden erhitzt und wieder abgekühlt.
Die Lösung wird von ungelösten Bestandteilen abfiltriert und anschließend das Lösungsmittel abdestilliert. Der Rückstand (Auswaage B)ist der lösliche Anteil und wird gravimetrisch bestimmt. Der unlösliche Anteil in % ergibt sich aus (A-B) /A x 100.

| unlöslicher Anteil | |
|---|---|
| Beispiel | 62% |
| Vergleichsbeispiel | 69% |

### Diskussion:

Aus den Ergebnissen ist ersichtlich, dass durch das erfindungsgemäße Verfahren höhere lineare Molekulargewichte (K-Werte) und geringere Anteile von vernetzten, d.h. unlöslichen Polymeren erhalten werden.

## Patentansprüche

1. Verfahren zur Herstellung von Polymerisaten auf Basis von Vinylester, Ethylen und gegebenenfalls weiteren comonomeren in Form deren wässrigen Polymerdispersionen oder in Wasser redispergierbaren Polymerpulver mittels radikalisch initiierter kontinuierlicher Emulsionspolymerisation und gegebenenfalls Trocknung der dabei erhaltenen Polymerdispersion , **dadurch gekennzeichnet, dass** die Emulsionspolymerisation in einer Kaskade, umfassend
a) mindestens einen vorgeschalteten Wärmetauscher, und
b) mindestens zwei hintereinandergeschalteten Rührkesseldruckreaktoren, **und**
**c) anschließend mindestens einen Drucklosreaktor,**
so durchgeführt wird, dass der Umsatz bei Verlassen des Wärmetauschers mindestens 10 % des Gesamtpolymerisationsumsatzes beträgt, und
vom ersten bis zum letzten der hintereinandergeschalteten Apparate ein abnehmender Druckgradient resultiert,
und nach Abschluß der Polymerisation in den Druckreaktoren im Drucklosreaktor nachpolymerisiert wird.

2. Verfahren nach Anspruch 1, **dadurch gekennzeichnet, dass** die Verweilzeit t_{w} im Wärmetauscher zwischen 0.8 und 0.2 Verweilzeiten t_{R} des Reaktors beträgt.

3. Verfahren nach Anspruch 1 oder 2, **dadurch gekennzeichnet, dass** vor Beginn der Polymerisation die Druckreaktoren zu 50 bis 80 % des Volumens mit einer Polymerdispersion befüllt werden, welche dem Endprodukt der Polymerisation bezüglich Copolymerzusammensetzung, Art und Menge des Schutzkolloids sowie Teilchengröße und Festgehalt entspricht.

4. Verfahren nach Anspruch 1 bis 3, **dadurch gekennzeichnet, dass** die Edukte des Polymerisationsansatzes ganz oder teilweise in einer vorgeschalteten Mischeinheit gemischt werden, und anschließend in den Wärmetauscher zugeführt werden.

5. Verfahren nach Anspruch 1 bis 4, **dadurch gekennzeichnet, dass** die Druckreaktoren mit einer solchen Menge an Ethylen beaufschlagt werden, dass bei einem Druck von 30 bis 80 bar im Wärmetauscher und erstem Druckreaktor und bei einem Druck von 10 bis 40 bar im letzten Druckreaktor polymerisiert wird, und der Ethylendruck so reguliert wird, dass vom ersten bis zum letzten der hintereinandergeschalteten Druckreaktoren ein abnehmender Druckgradient resultiert.

6. Verfahren nach Anspruch 1 bis 5, **dadurch gekennzeichnet, dass** 50 bis 100 Gew.-%, bezogen auf das Gesamtgewicht, der Vinylestermonomere und gegebenenfalls weiterer Comonomere, ausgenommen Ethylen, im Wärmetauscher zudosiert werden, der Rest in späteren Druckreaktoren zudosiert wird, und Ethylen zu mindestens 50 Gew.-% im Wärmetauscher vorgelegt wird.

7. Verfahren nach Anspruch 1 bis 6, **dadurch gekennzeichnet, dass** mindestens 70 Gew.-% des Schutzkolloids vor dem Wärmetauscher oder im Wärmetauscher vorgelegt werden.

8. Verfahren nach Anspruch 1 bis 7, **dadurch gekennzeichnet, dass** die Initiatoren so zudosiert werden, dass die Polymerisation im ersten Druckreaktor bis zu einem Restmonomergehalt von ≤20 Gew.-% und im letzten Druckreaktor bis zu einem Restmonomergehalt von ≤ 5 Gew.-% geführt wird, jeweils bezogen auf das Gesamtgewicht der Monomere.

9. Verfahren nach Anspruch 1 bis 8, **dadurch gekennzeichnet, dass** bei mittleren Verweilzeiten in der Druckreaktorkaskade von insgesamt 60 bis 180 Minuten polymerisiert wird.

10. Verfahren nach Anspruch 1 bis 9, **dadurch gekennzeichnet, dass** Polymerisate mit einer Glasübergangstemperatur Tg von -20°C bis + 30°C hergestellt werden.

11. Verfahren nach Anspruch 1 bis 10, **dadurch gekennzeichnet, dass** die damit erhaltenen wässrigen Dispersionen, gegebenenfalls nach Zugabe weiterer Schutzkolloide als Verdüsungshilfe, mittels Sprühtrocknung getrocknet werden.

12. Vorrichtung zur Durchführung des Verfahrens nach Anspruch 1 bis 11 umfassend mindestens einen vorgeschalteten Wärmetauscher und mindestens zwei hintereinandergeschaltete Rührkesseldruckreaktoren,
wobei vom ersten bis zum letzten der hintereinandergeschalteten Apparate ein abnehmender Druckgradient resultiert,
und hinter den Rührkesseldruckreaktoren mindestens ein Drucklosreaktor angeordnet ist.

13. Vorrichtung nach Anspruch 12, **dadurch gekennzeichnet, dass** dem Wärmetauscher eine Mischeinheit vorgeschaltet ist.

14. Vorrichtung nach Anspruch 12 oder 13, **dadurch gekennzeichnet, dass** der Wärmetauscher ein Röhrenwärmetauscher ist.

## Claims

1. Process for the preparation of polymers based on vinyl ester, ethylene and optionally further comonomers in the form of their aqueous polymer dispersions or water-redispersible polymer powder by means of free radical continuous emulsion polymerization and optionally drying of the polymer dispersion obtained, **characterized in that** the emulsion polymerization is carried out in a cascade comprising
a) at least one upstream heat exchanger, and
b) at least two stirred-tank pressure-resistant reactors connected in series, and
c) then at least one pressureless reactor,
in such a way that the conversion on leaving the heat exchanger is at least 10% of the total polymerization conversion, and
a decreasing pressure gradient results from the first to the last of the apparatuses connected in series,
and after the end of the polymerization in the pressure-resistant reactors, postpolymerization is effected in the pressureless reactor.

2. Process according to Claim 1, **characterized in that** the residence time t_{w} in the heat exchanger is between 0.8 and 0.2 residence time t_{R} of the reactor.

3. Process according to Claim 1 or 2, **characterized in that**, before the beginning of the polymerization, the pressure-resistant reactors are filled to 50 to 80% of the volume with a polymer dispersion which corresponds to the end product of the polymerization with regard to copolymer composition, type and amount of protective colloid and particle size and solids content.

4. Process according to Claims 1 to 3, **characterized in that** the starting materials of the polymerization batch are mixed completely or partly in an upstream mixing unit and then fed into the heat exchanger.

5. Process according to Claims 1 to 4, **characterized in that** the pressure-resistant reactors are fed with an amount of ethylene such that polymerization is effected at a pressure of 30 to 80 bar in the heat exchanger and the first pressure-resistant reactor and at a pressure of 10 to 40 bar in the last pressure-resistant reactor, and the ethylene pressure is regulated so that a decreasing pressure gradient results from the first to the last of the pressure-resistant reactors connected in series.

6. Process according to Claims 1 to 5, **characterized in that** 50 to 100% by weight, based on the total weight, of the vinyl ester monomers and optionally further comonomers, except for ethylene, are metered into the heat exchanger, the remainder is metered into subsequent pressure-resistant reactors, and at least 50% by weight of ethylene is initially introduced into the heat exchanger.

7. Process according to Claims 1 to 6, **characterized in that** at least 70% by weight of the protective colloid is initially introduced before the heat exchanger or in the heat exchanger.

8. Process according to Claims 1 to 7, **characterized in that** the initiators are metered in so that the polymerization is carried out to a residual monomer content of ≤ 20% by weight in the first pressure-resistant reactor and to a residual monomer content of ≤ 5% by weight in the last pressure-resistant reactor, based in each case on the total weight of the monomers.

9. Process according to Claims 1 to 8, **characterized in that** polymerization is effected with average residence times of altogether 60 to 180 minutes in the pressure-resistant reactor cascade.

10. Process according to Claims 1 to 9, **characterized in that** polymers having a glass transition temperature Tg of -20°C to + 30°C are prepared.

11. Process according to Claims 1 to 10, **characterized in that** the aqueous dispersions obtained thereby are dried by means of spray drying, optionally after addition of further protective colloids as an atomization aid.

12. Apparatus for carrying out the process according to Claims 1 to 11, comprising at least one upstream heat exchanger and at least two stirred-tank pressure-resistant reactors connected in series,
wherein a decreasing pressure gradient results from the first to the last of the apparatuses connected in series,
and at least one pressureless reactor is arranged behind the stirred-tank pressure-resistant reactors.

13. Apparatus according to Claim 12, **characterized in that** a mixing unit is located upstream of the heat exchanger.

14. Apparatus according to Claim 12 or 13, **characterized in that** the heat exchanger is a tubular heat exchanger.

## Revendications

1. Procédé pour la production de polymères à base d'ester vinylique, d'éthylène et éventuellement d'autres comonomères, sous forme de leurs dispersions aqueuses de polymères ou de poudres de polymères redispersables dans l'eau, par polymérisation en émulsion continue à amorçage radicalaire et éventuellement séchage de la dispersion de polymère ainsi obtenue, **caractérisé en ce que** la polymérisation en émulsion est effectuée dans une cascade comprenant
a) au moins un échangeur thermique placé en amont, et
b) au moins deux réacteurs sous pression de type cuve à agitation raccordés en série, et
c) ensuite au moins un réacteur sans pression,
de manière à ce que le degré de conversion à la sortie de l'échangeur thermique soit au moins de 10 % de la conversion de polymérisation totale, et
que du premier au dernier des appareils raccordés en série il résulte un gradient de pression décroissant,
et une fois terminée la polymérisation dans les réacteurs sous pression, une post-polymérisation est effectuée dans le réacteur sans pression.

2. Procédé selon la revendication 1, **caractérisé en ce que** le temps de séjour t_{w} dans l'échangeur thermique est compris entre 0,8 et 0,2 fois le temps de séjour t_{R} du réacteur.

3. Procédé selon la revendication 1 ou 2, **caractérisé en ce qu'**avant le début de la polymérisation les réacteurs sous pression sont remplis à 50 à 80 % du volume avec une dispersion de polymère qui correspond au produit final de la polymérisation en ce qui concerne la composition du copolymère, la nature et la quantité du colloïde protecteur ainsi que la taille de particule et la teneur en matière solide.

4. Procédé selon les revendications 1 à 3, **caractérisé en ce que** les produits de départ du mélange initial de polymérisation sont mélangés en partie ou en totalité dans une unité de mélange placée en amont, et ensuite alimentés dans l'échangeur thermique.

5. Procédé selon les revendications 1 à 4, **caractérisé en ce que** les réacteurs sous pression sont chargés avec une quantité d'éthylène telle que la polymérisation est effectuée sous une pression de 30 à 80 bars dans l'échangeur thermique et le premier réacteur sous pression et sous une pression de 10 à 40 bars dans le dernier réacteur sous pression, et la pression d'éthylène est régulée de manière à ce qu'il résulte un gradient de pression décroissant du premier au dernier des réacteurs sous pression raccordés en série.

6. Procédé selon les revendications 1 à 5, **caractérisé en ce qu'**on introduit dans l'échangeur thermique de 50 à 100 % en poids, par rapport au poids total, des monomères d'ester vinylique et éventuellement d'autres comonomères, hormis l'éthylène, on introduit le reste dans des réacteurs sous pression placés à la suite, et l'éthylène est disposé au préalable à raison d'au moins 50 % en poids dans l'échangeur thermique.

7. Procédé selon les revendications 1 à 6, **caractérisé en ce qu'**au moins 70 % en poids du colloïde protecteur sont disposés au préalable avant l'échangeur thermique ou dans l'échangeur thermique.

8. Procédé selon les revendications 1 à 7, **caractérisé en ce que** les amorceurs sont introduits de manière à ce que la polymérisation soit effectuée dans le premier réacteur sous pression jusqu'à une teneur en monomères résiduels de ≤ 20 % en poids et dans le dernier réacteur sous pression jusqu'à une teneur en monomères résiduels de ≤ 5 % en poids, à chaque fois par rapport au poids total des monomères.

9. Procédé selon les revendications 1 à 8, **caractérisé en ce que** la polymérisation est effectuée en des temps moyens de séjour dans la cascade de réacteurs sous pression de 60 à 180 minutes au total.

10. Procédé selon les revendications 1 à 9, **caractérisé en ce qu'**on produit des polymères ayant une température de transition vitreuse Tg de -20 °C à +30 °C.

11. Procédé selon les revendications 1 à 10, **caractérisé en ce que** les dispersions aqueuses ainsi obtenues sont séchées par séchage par atomisation, éventuellement après addition d'autres colloïdes protecteurs en tant qu'adjuvants de pulvérisation.

12. Dispositif pour la mise en oeuvre du procédé selon les revendications 1 à 11, comprenant au moins un échangeur thermique placé en amont et au moins deux réacteurs sous pression de type cuve à agitation raccordés en série,
un gradient de pression décroissant résultant du premier au dernier des appareils raccordés en série,
et au moins un réacteur sans pression étant disposé après les réacteurs sous pression de type cuve à agitation.

13. Dispositif selon la revendication 12, **caractérisé en ce qu'**une unité de mélange est placée en amont de l'échangeur thermique.

14. Dispositif selon la revendications 12 ou 13, **caractérisé en ce que** l'échangeur thermique est un échangeur thermique tubulaire.
